# EUROPEAN PATENT SPECIFICATION

(11) **EP 3 921 586 B1**
(45) Date of publication and mention of the grant of the patent: **07.06.2023**
(21) Application number: 20702682.4
(22) Date of filing: 07.02.2020
(51) Int. Cl.: F27D 21/00, C21B 7/10, G01N 29/265, F27D 9/00, C21B 7/24, F27D 19/00, G01N 29/07, G01N 29/22

(54) **COOLING PLATE THICKNESS MEASUREMENT IN A METALLURGICAL FURNACE**
KÜHLPLATTENDICKENMESSUNG IN EINEM METALLURGISCHEN OFEN
MESURE DE L'ÉPAISSEUR D'UNE PLAQUE DE REFROIDISSEMENT DANS UN FOUR METALLURGIQUE

(30) Priority: 08.02.2019 EP 19156287
(43) Date of publication of application: 15.12.2021
(73) Proprietor: Paul Wurth S.A., 1122 Luxembourg (LU)
(72) Inventor: OLIVIERI, Stefano, 16154 Genova (IT); CRAVINO, Fabio, 16011 Arenzano (IT); LODI, Giorgio Federico, 16149 Genova (IT)
(74) Representative: Office Freylinger
(86) International application number: PCT/EP2020/053159
(87) International publication number: WO 2020/161314

(56) References cited:
- WO-A1-2015/059916
- WO-A1-2018/048083
- JP-A- 2010 271 072
- JP-A- 2015 169 548
- KR-B1- 101 594 719

## Description

### FIELD OF THE INVENTION

The present invention generally relates to cooling plates for metallurgical furnaces, namely blast furnaces, and in particular to a device and method of measuring the thickness of the cooling plates.

### BACKGROUND OF THE INVENTION

Cooling plates for metallurgical furnaces, also called "staves", are well known in the art. They are used to cover the inner wall of the outer shell of the metallurgical furnace, as e.g. a blast furnace or electric arc furnace, to provide:
(1) a heat evacuating protection screen between the interior of the furnace and the outer furnace shell; and
(2) an anchoring means for a refractory brick lining, a refractory guniting or a process generated accretion layer inside the furnace.

Originally, the cooling plates were cast iron plates with cooling pipes cast therein. As an alternative to cast iron staves, copper staves have been developed. Nowadays, most cooling plates for a metallurgical furnace are made of copper, a copper alloy or, more recently, of steel.

The refractory brick lining, the refractory guniting material or the process generated accretion layer forms a protective layer arranged in front of the hot face of the panel-like body. This protecting layer is useful to protect the cooling plate from deterioration caused by the harsh environment reigning inside the furnace. In practice, the furnace is however also occasionally operated without this protective layer, resulting in erosion of the lamellar ribs of the hot face.

While the blast furnace is initially provided with a refractory brick lining on the front side of the staves, this lining may wear out during the campaign depending on the operating conditions. In particular, it has been observed that, in the bosh section, the refractory lining may disappear relatively rapidly. While an accretion layer of slag and burdening then typically forms on the hot side of the cooling plates, it actually continuously builds-up and wears out, so that during certain periods of time the cooling plates are directly exposed to the harsh conditions inside the blast furnace, conducting to the wear of the cooling plate body.

The principal causes of wear to the accretion layer, and of course to the lining and cooling plate, are the upward flow of hot gases and the rubbing of the sinking burden (coal, ore, etc.). Regarding the flow of hot gases, the wear is not only due to a thermal load, but also to abrasion by particles carried in the ascending gases.

Document JP-A2-61264110 discloses a cooling stave comprising a wear detection system using an ultrasonic probe in contact with the rear face of the stave body in order to detect erosion thereof. This system allows measuring the residual body thickness between the front and rear faces.

Document KR20110076422 discloses a thickness measurement system, wherein an ultrasonic probe is mounted at the end of a flexible extension member, which permits inserting the ultrasonic probe in the inlet and outlet regions of the coolant channel. It is thus possible to actually measure the thickness of the body between the cooling plate front side and the coolant channel. This information is of interest since it gives the residual body thickness to the coolant channel, which is critical for safe operation of the blast furnace, as introduction of water into the blast furnace must be avoided. However, this system only permits a local measurement (at the beginning and/or at the end of the coolant channel) and is today considered insufficient for a proper assessment of the condition of the cooling plate. Indeed, experience shows that often, the cooling plate is more worn in the middle body than at the extremities. Assessments based on this system thus leads to an incorrect analysis in reference to the actual general wear of the cooling plate, and therefore to an incorrect forecast of its residual life time.

KR 101 594 719 B1 discloses a stave thickness measuring apparatus wherein an ultrasonic sensor unit is connected to a driving unit, which permits inserting the ultrasonic sensor in a stave and moving the sensor inside the stave. It is thus possible to perform thickness measurements along the whole length of a stave. However, the operating principle requires installation of the ultrasonic sensor unit at each measuring point, e.g. contact legs being deployed or a balloon being inflated, to ensure close contact between the ultrasonic probe and the inner surface of the stave, which complicates the whole measuring process.

Other systems for thickness measurement of staves are disclosed in documents JP 2010 271072 A and JP 2015 169548 A.

### OBJECT OF THE INVENTION

The object of the present invention is to provide an alternative and reliable way of monitoring the wear status of cooling plates.

This object is achieved by a device and method of measuring the thickness of a cooling plate as claimed in claims 1 and 10.

### SUMMARY OF THE INVENTION

The present invention proposes a device for measuring a thickness of a cooling plate, which is designed to fit inside a coolant channel of the cooling plate. The device comprises:
a probe holder comprising a housing having a front sensor side and an opposite rear back side, an ultrasonic probe being arranged in the probe holder housing to be able to transmit and receive ultrasonic waves from the front sensor side;
an expandable structure configured to deploy at the back side of the probe housing; and
a flexible cord linked to the probe housing to assist the progression of the probe holder through the length of the coolant channel.The expandable structure is configured to expand from a compact configuration to an expanded configuration, which is designed to bear against the inner surface of the coolant channel and bias the sensor side of the sensor housing against the inner surface of the coolant channel.

The present invention thus proposes a device for thickness measurement that is designed to be inserted inside the coolant channel of the cooling plate and is adapted to be guided through the length of the coolant channel in order to measure the body thickness at a plurality of locations along the channel, i.e. not only in the inlet and outlet regions. This is made possible inter alia by the use of an expandable structure associated with the probe housing, which is in compact (i.e. low-height) configuration during insertion into the coolant channel, and which is then expanded to occupy the full diameter of the coolant channel for the thickness measurement. Since the probe is inside the coolant channel, it will measure the body thickness remaining from the channel to the front side of the body.

The progression of the probe holder inside the coolant channel is controlled by means of the flexible cord. The flexible cord is advantageously designed to be longitudinally flexible and torsion resistant, for an improved control of the orientation of the probe holder in the channel. Indeed, the operator should ensure that the sensor side of the probe holder is turned towards the front side of the cooling panel, so that the ultrasound waves are emitted in the direction of interest.

In embodiments, the flexible cord may be a multi-row chain connected to the probe housing to extend longitudinally in the coolant channel, hence showing longitudinal flexibility and torsional stiffness. Other types of flexible cords may be employed, also showing a longitudinal flexibility and being torsion resistant, for example a strong strap.

The expandable structure comprises a front and a rear lever articulated on the housing at opposite ends. Spring means are arranged to bias the levers towards one another, e.g. a tension spring attached to both levers. This design entails flexibility to the device that allows passing through bends of the cooling plate channels, and permits that the levers tend to spontaneously come towards each other, to maximize the extent of the device along the diameter of the coolant channel. This ensures that the sensor side comes into contact with the surface of the coolant channel. In other words, the combination of levers with the said spring means enables a spontaneous adaptation of the measuring device such that it expands over the whole inner diameter of the coolant channel, ensuring a continuous intimate contact between the probe holder sensor side and the inner surface of the coolant channel.

Conveniently, a wheel is pivotally mounted at the free end of the first lever, and the second lever includes at its free end a pivotally mounted connecting element to which the cord is connected.

In embodiments, a locking cable assembly is provided to lock the expandable structure in expanded configuration. The locking cable assembly includes a steel wire fitted into an outer housing; the outer housing is in abutment against a fitting element provided on one lever; and the wire extends to the second lever and is blocked by another fitting element. This locking cable assembly allows applying a closing force on the levers or simply defining a maximum opening between both levers, to maintain them in a desired configuration.

The ultrasonic probe may be built based on any appropriate technology. It typically includes one ultrasonic sensor or transducer, but could comprise more. In embodiments, a fluid coupling medium, e.g. water, is used between the sensor and the coolant channel surface. Therefore, the housing may include an inlet port for supply of pressurized water through a water hose, and a spray orifice is provided on the sensor side.

According to another aspect, the present invention proposes a method of measuring a thickness of a cooling plate comprising a body having a front face, an opposite rear face and one or more coolant channels therein, comprising:
introducing into said coolant channel a device for thickness measurement according to the first aspect;
moving said probe holder through the length of said coolant channel and handling said probe holder such that said ultrasonic probe is generally turned towards said front face, while measuring the body thickness between the front side and the coolant channel;
wherein during said measurements said expandable structure is deployed to bear against the inner surface of the coolant channel and bias the sensor side of the housing against the surface of the coolant channel;
and wherein progression through the channel is assisted by means of said flexible cord attached to said probe housing.

These and other embodiments of the present device and method are described in the appended dependent claims.

### BRIEF DESCRIPTION OF THE DRAWINGS

The present invention will now be described, by way of examples, with reference to the accompanying drawings, in which:
FIG. 1: is a perspective view of an embodiment of the device for thickness measurement according to the present invention;
FIG. 2: is a vertical section view through a cooling plate in which the device of Fig.1 is introduced;
FIG. 3: is a view of the device of Fig.1 inside a coolant channel of the cooling plate; and
FIG. 4: is a top view of the device of Fig.1.

### DETAILED DESCRIPTION OF A PREFERRED EMBODIMENT

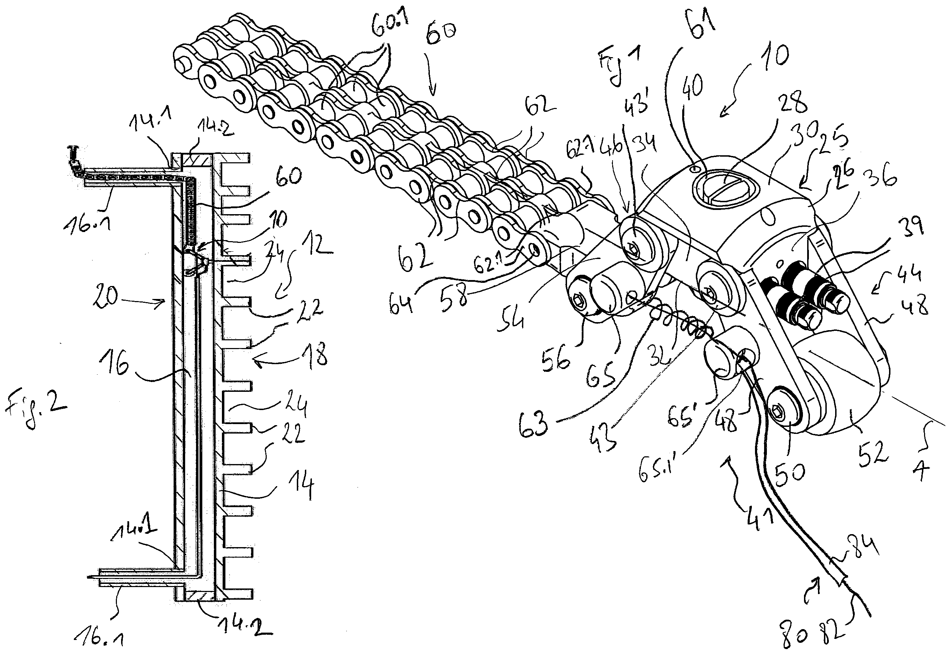

The present invention relates to a device and method for measuring the thickness of cooling plates. The device 10 is designed to be inserted into coolant channels of cooling plates 12, to measure the body thickness remaining to the front side of cooling panel, as depicted in Fig.2.

As it is known, cooling plates are used in the iron making industry for cooling the wall of furnaces such as e.g. shaft furnaces, blast furnaces or electric arc furnaces. A cooling plate comprises a body 14 that is typically formed from a slab e.g. a cast or forged body of copper, copper alloy or steel. Furthermore, the body has at least one conventional coolant channel embedded therein. The coolant channels may be formed by cast-in pipes or by drilling through the body.

Fig. 2 shows a conventional cooling plate 12 comprising a slab-shaped cast body 14 of copper alloy comprising a plurality of coolant channels 16 (only one is seen in the Figure). The coolant channels 16 have been obtained by drilling through the shaped body from one longitudinal end to the other; then drilling top and bottom access holes 14.1 at the extremities of the coolant channel 16. The axial extremities of the coolant channel 16 are closed by plugs 14.2, whereas connection pipes 16.1 are welded to the access holes 14.1. In the blast furnace, such cooling plates 12 provide a heat evacuating protection screen between the interior of the furnace and the outer furnace shell (or armour).

In the blast furnace, the cooling plate 12 is mounted onto the furnace shell. The body 14 has a front face generally indicated 18, also referred to as hot face, which is turned towards the furnace interior, and an opposite rear face 20, also referred to as cold face, which in use faces the inner surface of the furnace shell.

As is known in the art, the front face 18 of body 12 advantageously has a structured surface, in particular with alternating ribs 22 and grooves 24. When the cooling plate 10 is mounted in the furnace, the grooves 24 and lamellar ribs 22 are generally arranged horizontally in order to provide an anchoring means for a refractory brick lining (not shown).

As it is known, depending on the operating conditions of the blast furnace, the refractory brick lining may be subject to erosion due to the descending burden material, leading to the fact that the cooling plates are unprotected and have to face the harsh environment inside the blast furnace. As a result, abrasion of the cooling plates occurs too, and it is desirable to know the wear status of the cooling plates.

An embodiment of the present device 10 for thickness measurement of cooling plates is shown in perspective in Fig.1. It comprises a probe holder 25 including a housing 26 that carries an ultrasonic probe 28 or transducer. The probe holder 26 is of globally square or rectangular shape and has an upper, sensor side 30, an opposite back side 32 as well as two lateral sides 34 and two transverse sides 36, 38. Transverse side 36 is also referred to as front side. In this embodiment, a pair of connectors 39 is provided for connection cables carrying the transmitting signal and the received signal. These cables are connected at the other end to a control unit (not shown) that is configured to operate reflection-type ultrasonic thickness measurement.

The ultrasonic probe 28 is arranged in the probe holder 26 to be able to transmit and receive ultrasonic waves from the sensor side 30. Reference sign 40 designates an opening for the ultrasonic probe 28 provided in the sensor side 30. The ultrasonic probe 28 is flush with the sensor side 30.

Reference sign A in Fig.1 designates a longitudinal axis, which is the direction in which the device 10 is used in practice.

The probe holder 26 further includes an expandable structure, generally indicated 41, configured to be deployable at the back side of the housing 26, in such a way that the device 10 can be brought in an operating configuration where the sensor side 30 is near to or bears against the coolant channel surface 42, whereas the expandable structure also bears against a portion of the coolant channel surface 42 situated below the back side 32 of the holder 26.

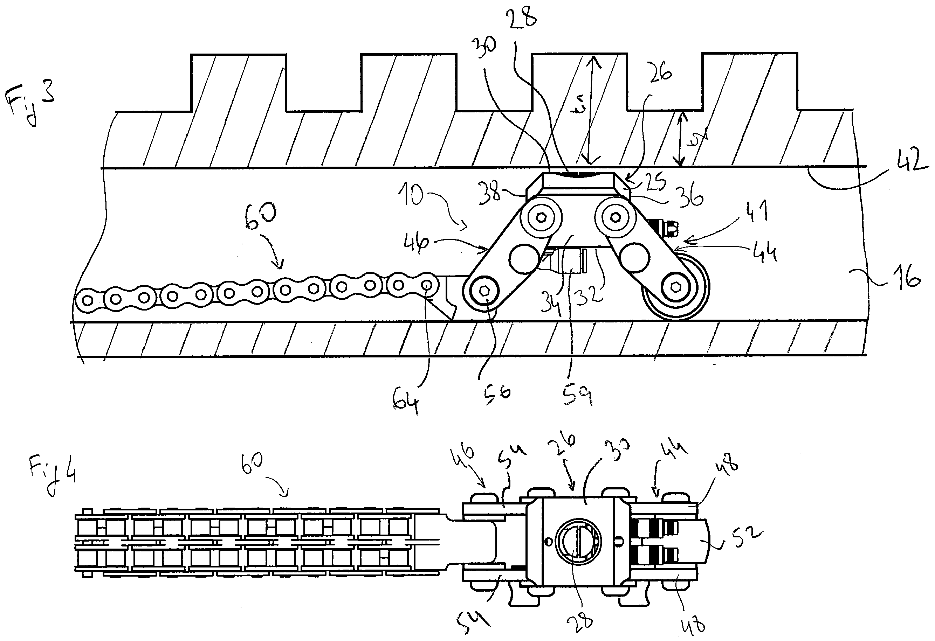

In this operating configuration, best seen in Fig.3, the expandable structure 40 is thus deployed such that device 10 expands over the whole inner diameter of the coolant channel 16, this deployment ensuring intimate contact between the inner surface 42 of the coolant channel 16 and the probe holder sensor side 30.

It may be noted here that the device 10 is particularly designed for operation in cooling plates with drilled-in cooling channels, generally of copper/alloy, where the sensor surface 30 is in direct contact with the surface 42 of the body 14, i.e. there is no intermediate piping or layer.

The expandable structure 40 here comprises a front lever 44 and a rear lever 46 that are articulated on the housing 26.

The front lever 44 comprises a pair of parallel arms 48 pivotally fixed at one end to opposite lateral sides of the housing 26 and linked at the opposite ends by a bolt 50 that forms an axis for a wheel 52.

The rear lever 46 likewise comprises a pair of parallel arms 54 pivotally fixed at one end to opposite lateral sides of the housing 26 and linked at the opposite ends by a bolt 56 that forms a pivoting axis for a sliding connector element 58. Attached to the connector element 58 is a chain 60 that permits stably controlling the progression of the device 10 in the coolant channel 16.

The chain 60 is here a duplex-type roller chain having two rows of side links 62. The three end links 62.1 next to the lever 46 are connected to the connector element 58 by means of a shaft 64.

Such chain is advantageous since it is articulated in its longitudinal direction (i.e. along axis A) but is rather stiff in the transversal direction, i.e. it is torsion resistant.

The chain 60 forms a flexible cord that allows introducing the device 10 into the cooling channel 16 of the cooling plate 12. The device is inserted through the upper connection pipe 16.1 and then vertically into the straight section of the coolant channel 16, parallel to the hot face 18. The flexibility of the chain 60 together with the articulated structure of the probe holder makes it easy to take the 90° bend after the inner end of pipe 16.1. The articulation of the levers 44, 46 on the probe holder 26 also facilitates passing through the bend at the junction from the inlet pipe 16.1 to the straight coolant channel 16.

It may be noted that the levers 44, 46 are articulated so that they pivot in a same plane parallel to axis A and substantially perpendicular to the front side 30. The pivoting axes of the levers 44, 46 at the housing 26 are provided by a pair of bolts 43, 43' that extend from one transverse side 34 to the other and are thus perpendicular to direction A. The connection axis 64 of the chain to the connector element 58 is parallel to the direction of bolts 43 and 43'. Similarly, the articulations of the chain, i.e. its pins and bushings 60.1, are also parallel to connection axis 64 and bolts 43 and 43'.

Advantageously, an extension spring 63, or similar, is connected to each lever 44, 46 to bias them in closing direction. The spring 63 is attached to the fitting elements 65, 65', which are arranged centrally on one arm of each lever. The spring creates a load that brings the two levers together. The opening angle of the V-shaped profile of the device is thus reduced, increasing the height of the device. Thanks to spring 63, the device spontaneously expands inside the coolant channel 16 to occupy to available space, whereby the sensor side 30 and the wheel 52 together with slider 54 bear on opposite portions of the inner surface of coolant channel 16.

To possibly assist the closing of the levers 44 and 46, and maintain the device 10 in this operating configuration, a brake-type lock cable assembly 80 is used, i.e. a steel wire 82 in an outer housing 84. Fitting element 65' comprises a stepped bore 65.1' to block one end of the outer housing 84 and allow the steel wire 82 to pass through and join the other fitting element 65. Pulling on the wire 82 at the opposite end of the cable assembly 80 will bring the levers toward each other, since the wire is blocked at 65 and the housing at 65'.

It may be noted that in order to introduce the device 10 into the cooling plate 12, the latter is disconnected from the furnace coolant circuit and emptied from coolant water.

Once the probe holder 26 is inside the coolant channel 16, it is progressively lowered to perform thickness measurements at a plurality of positions along the length of the coolant channel 16. The present device 10 allows measuring the body thickness not only at the inlet and outlet regions of the body, but also at a plurality of positions along the length of the body, including in the central regions.

In practice, the device 10 is moved to a plurality of positions, and a thickness measurement is performed for each position. Alternatively, the measurement could be done continuously. During the thickness measurement, the sensor side 30 is maintained substantially perpendicular to the front side 18. The angular orientation of the device 10 in the coolant channel 16 is known thanks to the configuration of the chain 60, which has a flattened cross section. Water is preferably used as coupling medium. Reference sign 59 designates an inlet port to which a water hose (not shown) is connected. Pressurised water is supplied through the hose, enters into the housing and is sprayed against the surface 42 of the coolant channel 16 by a dedicated drilled hole 61 surrounding the ultrasonic probe 28.

As it will be understood, since the device 10 is inserted inside the coolant channel 16, it measures a body thickness that corresponds to the distance from the inner side of the coolant channel 16 (facing the front side) to the foremost body portion on the front face, at the level of the probe holder 26 (i.e. perpendicular to the front side).

That is, when the probe is at the level of a rib 22, the body thickness corresponds to the distance between the inner surface of the channel to the tip of the rib 22, indicated t1 in Fig.3.

When the probe is at the level of a groove 24, the body thickness corresponds to the distance between the inner surface of the channel to the tip of the rib 22, indicated t2.

As it is known in the art, in reflection (or pulse-echo) mode, the sensor / transducer performs both the sending and the receiving of the pulsed sound waves as they are reflected back to the transducer from the interface formed by the front side of the cooling plate 12. The transducer may be of any appropriate technology, e.g. piezo electric; when excited, it may typically emit very short ultrasonic pulse waves with center frequencies ranging from 1 to 15 MHz. The control unit is configured to perform thickness measurement based on the time taken by the ultrasound wave to return to the coolant channel surface 42. For example, the control unit may be configured to display results in the form of a signal with an amplitude representing the intensity of the reflection and the distance, representing the arrival time of the reflection. The exploitation of the ultrasonic waves is not the focus of the present invention and those skilled in the art may devise other ways of exploiting the transducer signals.

Finally, one may observe in Fig.2 that whereas the device 10 is preferably inserted through the upper connection pipe 16.1 in the coolant channel 16, the various other cables can be passed through the lower connection pipe 16.2, specifically: the sensor cables, the water hose, and the lock cable assembly.

## Claims

1. A device (10) for measuring the thickness of a cooling plate (12), said device being designed to fit inside a coolant channel (16) of the cooling plate and comprising:
a probe holder (25) comprising a housing (26) having a front sensor side (30) and an opposite back side (32), an ultrasonic probe (28) being arranged in said probe holder housing to be able to transmit and receive ultrasonic waves from said front sensor side;
an expandable structure (41) configured to deploy at the back side (32) of said housing;
a flexible cord (60) linked to said probe housing to assist the progression of said probe holder through the length of the coolant channel (16);
wherein said expandable structure is configured to expand from a compact configuration to an expanded configuration, designed to bear against the inner surface (42) of said coolant channel (16) and bias the sensor side (30) of the sensor housing against the inner surface (42) of the coolant channel;
**characterized in that** said expandable structure comprises a front and a rear lever (44, 46) articulated on the housing at opposite ends, and spring means (63) arranged to bias said levers towards one another.

2. The device according to claim 1, wherein said flexible cord (60) is designed to be longitudinally flexible and torsion resistant, to control the orientation of the probe holder in said channel.

3. The device according to claim 1 or 2, wherein said flexible cord (60) has a substantially flattened cross-sectional profile and is connected to said probe holder (26).

4. The device according to claim 2 or 3, wherein said flexible cord (60) is a multi-row chain connected to said probe housing (26) to extend longitudinally in said coolant channel, hence showing longitudinal flexibility and torsional stiffness.

5. The device according to any one of the preceding claims, wherein the pivoting axes (43, 43') of said levers (44, 46) are sensibly parallel to said sensor side (30).

6. The device according to any one of the preceding claims, wherein a wheel (52) is pivotally mounted at the free end of said first lever (44) and said second lever (46) includes at its free end a pivotally mounted connecting element (54) to which said cord is connected.

7. The device according to any one of the preceding claims, comprising a locking cable assembly (80) including a steel wire (82) fitted into an outer housing (84), wherein said outer housing is in abutment against a fitting element (65') provided on one lever (44), and the wire (82) extends to the second lever (46) and is blocked by another fitting element (65).

8. The device according to claim 5, wherein said cord (60) is able to bend in a transverse direction perpendicular to its longitudinal extension, and said transverse direction is substantially parallel to the pivoting axes of said levers.

9. The device according to any one of the preceding claims, wherein said housing (26) of said probe holder (25) comprises an inlet port for a fluid coupling medium (59) and a spray orifice (61) in said sensor side.

10. A method of measuring a thickness of a cooling plate comprising a body having a front face (18), an opposite rear face (20) and one or more coolant channels (16) therein, comprising:
introducing into said coolant channel a device (10) as claimed in any one of the preceding claims;
moving said probe holder (25) through the length of said coolant channel and handling said probe holder such that said ultrasonic probe (28) is generally turned towards said front face (18), while measuring the body thickness between the front side and the coolant channel;
wherein during said measurements said expandable structure is deployed to bear against the inner surface (42) of the coolant channel and bias the sensor side of the housing against the surface of the coolant channel;
and wherein progression through the channel is assisted by means of said flexible cord attached to said probe housing.

11. The method according to claim 10, wherein a fluid coupling medium is supplied during thickness measurement, in-between said ultrasonic probe and the cooling channel inner surface.

12. The method according to claim 11, wherein said fluid coupling medium, is water sprayed from an orifice (61) in said sensor housing.

13. The method according to any one of claims 10 to 12, wherein said cooling plate body is obtained by casting and said coolant channel is drilled in said body.

## Patentansprüche

1. Vorrichtung (10) zur Messung der Dicke einer Kühlplatte (12), wobei die Vorrichtung derart ausgelegt ist, dass sie in einen Kühlmittelkanal (16) der Kühlplatte passt und Folgendes umfasst:
eine Sondenhalterung (25) umfassend ein Gehäuse (26) mit einer vorderen Sensorseite (30) und einer gegenüberliegenden Rückseite (32) und eine Ultraschallsonde (28), die derart in dem Sondenhalterungsgehäuse angeordnet ist, dass sie Ultraschallwellen von der vorderen Sensorseite senden und empfangen kann;
eine expandierbare Struktur (41), die dafür konfiguriert ist, an der Rückseite (32) des Gehäuses ausgefahren zu werden;
einen flexiblen Strang (60), der mit dem Sondengehäuse verbunden ist, um die Vorwärtsbewegung der Sondenhalterung durch die Länge des Kühlmittelkanals (16) zu unterstützen;
wobei die expandierbare Struktur dafür konfiguriert ist, von einer kompakten Konfiguration zu einer expandierten Konfiguration zu expandieren, die dafür ausgelegt ist, an der Innenfläche (42) des Kühlmittelkanals (16) anzuliegen und die Sensorseite (30) des Sensorgehäuses gegen die Innenfläche (42) des Kühlmittelkanals vorzuspannen;
**dadurch gekennzeichnet, dass** die expandierbare Struktur einen vorderen und einen hinteren Hebel (44, 46), die auf dem Gehäuse an einander gegenüberliegenden Enden gelenkig angeordnet sind, und Federmittel (63), die zum Vorspannen der Hebel gegeneinander angeordnet sind, umfasst.

2. Vorrichtung nach Anspruch 1, wobei der flexible Strang (60) dafür ausgelegt ist, in Längsrichtung flexibel und verwindungssteif zu sein, um die Orientierung der Sondenhalterung im Kanal zu steuern.

3. Vorrichtung nach Anspruch 1 oder 2, wobei der flexible Strang (60) ein im Wesentlichen abgeflachtes Querschnittsprofil aufweist und mit der Sondenhalterung (26) verbunden ist.

4. Vorrichtung nach Anspruch 2 oder 3, wobei der flexible Strang (60) eine mehrreihige Kette ist, die derart mit dem Sondengehäuse (26) verbunden ist, dass sie sich längs im Kühlmittelkanal erstreckt und daher eine Längsflexibilität und Verwindungssteifigkeit aufweist.

5. Vorrichtung nach irgendeinem der vorangehenden Ansprüche, wobei die Schwenkachsen (43, 43') der Hebel (44, 46) im Wesentlichen parallel zur Sensorseite (30) sind.

6. Vorrichtung nach irgendeinem der vorangehenden Ansprüche, wobei ein Rad (52) schwenkbar am freien Ende des ersten Hebels (44) angebracht ist und der zweite Hebel (46) an seinem freien Ende ein schwenkbar angebrachtes Verbindungselement (54), mit welchem der Strang verbunden ist, umfasst.

7. Vorrichtung nach irgendeinem der vorangehenden Ansprüche, umfassend eine Schließkabelbaugruppe (80), die einen in ein Außengehäuse (84) eingepassten Stahldraht (82) umfasst, wobei das Außengehäuse in Anlage mit einem auf einem Hebel (44) vorgesehenen Befestigungselement (65') ist und der Draht (82) sich zum zweiten Hebel (46) erstreckt und durch ein anderes Befestigungselement (65) arretiert ist.

8. Vorrichtung nach Anspruch 5, wobei der Strang (60) biegsam in einer Querrichtung senkrecht zu seiner Längserstreckung ist und die Querrichtung im Wesentlichen parallel zu den Schwenkachsen der Hebel ist.

9. Vorrichtung nach irgendeinem der vorangehenden Ansprüche, wobei das Gehäuse (26) der Sondenhalterung (25) einen Einlassanschluss für ein fluides Kopplungsmedium (59) und eine Sprühöffnung (61) in der Sensorseite umfasst

10. Verfahren zur Messung einer Dicke einer Kühlplatte, die einen Körper mit einer Vorderseite (18), einer gegenüberliegenden Rückseite (20) und einem oder mehreren Kühlmittelkanälen (16) darin umfasst, umfassend:
Einbringen einer Vorrichtung (10) nach irgendeinem der vorangehenden Ansprüche in den Kühlmittelkanal;
Bewegen der Sondenhalterung (25) durch die Länge des Kühlmittelkanals und Handhaben der Sondenhalterung derart, dass die Ultraschallsonde (28) generell zur Vorderseite (18) hin gedreht ist, während die Körperdicke zwischen der Vorderseite und dem Kühlmittelkanal gemessen wird;
wobei während der Messungen die expandierbare Struktur derart ausgefahren ist, dass sie an der Innenfläche (42) des Kühlmittelkanals anliegt und die Sensorseite des Gehäuses gegen die Fläche des Kühlmittelkanals vorspannt;
und wobei die Vorwärtsbewegung durch den Kanal mittels des am Sondengehäuse befestigten flexiblen Strangs unterstützt wird.

11. Verfahren nach Anspruch 10, wobei ein fluides Kopplungsmedium während der Dickenmessung zwischen der Ultraschallsonde und der Innenfläche des Kühlmittelkanals zugeführt wird.

12. Verfahren nach Anspruch 11, wobei das fluide Kopplungsmedium Wasser ist, das aus einer Öffnung (61) im Sensorgehäuse gesprüht wird.

13. Verfahren nach irgendeinem der Ansprüche 10 bis 12, wobei der Kühlplattenkörper durch Gießen hergestellt ist und der Kühlmittelkanal in den Körper gebohrt ist.

## Revendications

1. Dispositif (10) permettant de mesurer l'épaisseur d'une plaque de refroidissement (12), ledit dispositif étant conçu pour s'insérer à l'intérieur d'un canal pour fluide de refroidissement (16) de la plaque de refroidissement, et comprenant :
un porte-sonde (25) comprenant un logement (26) présentant une face avant pour sonde (30) et une face arrière opposée (32), une sonde à ultrasons (28) disposée dans ledit logement de porte-sonde de façon à pouvoir émettre et recevoir des ondes ultrasonores depuis ladite face avant pour sonde ;
une structure extensible (41) configurée pour se déployer au niveau de la face arrière (32) dudit logement ;
un câble flexible (60) relié audit logement de sonde pour assister la progression dudit porte-sonde à travers le canal pour fluide de refroidissement (16) dans le sens de la longueur ;
dans lequel ladite structure extensible est configurée pour s'étendre d'une configuration compacte à une configuration étendue conçue pour appuyer contre la surface intérieure (42) dudit canal pour fluide de refroidissement (16) et contraindre la face pour sonde (30) du logement de sonde contre la surface intérieure (42) du canal pour fluide de refroidissement ;
**caractérisé en ce que** ladite structure extensible comprend un levier avant et un levier arrière (44, 46) articulés sur des côtés opposés du logement, et un moyen élastique (63) agencé pour solliciter lesdits leviers l'un vers l'autre.

2. Dispositif selon la revendication 1, dans lequel ledit câble flexible (60) est conçu pour être flexible dans le sens longitudinal et résistant à la torsion, pour contrôler l'orientation du porte-sonde dans ledit canal.

3. Dispositif selon la revendication 1 ou 2, dans lequel ledit câble flexible (60) a un profil de section transversale sensiblement aplati et est relié audit porte-sonde (26).

4. Dispositif selon la revendication 2 ou 3, dans lequel ledit câble flexible (60) est une chaîne à plusieurs rangées reliée audit logement de sonde (26) destinée à s'étendre de manière longitudinale dans ledit canal pour fluide de refroidissement, présentant ainsi une flexibilité longitudinale et une rigidité en torsion.

5. Dispositif selon l'une quelconque des revendications précédentes, dans lequel les axes de pivotement (43, 43') desdits leviers (44, 46) sont sensiblement parallèles à ladite face pour sonde (30).

6. Dispositif selon l'une quelconque des revendications précédentes, dans lequel une roue (52) est montée pivotante à l'extrémité libre dudit premier levier (44) et ledit second levier (46) est pourvu à son extrémité libre d'un élément de connexion (54) monté pivotant auquel ledit câble est relié.

7. Dispositif selon l'une quelconque des revendications précédentes, comprenant un ensemble formant câble de verrouillage (80) qui comprend un fil d'acier (82) inséré dans une gaine extérieure (84), dans lequel ladite gaine extérieure est en butée contre un élément d'ajustage (65') situé sur un levier (44), et le fil (82) s'étend vers le second levier (46) et est bloqué par un autre élément d'ajustage (65).

8. Dispositif selon la revendication 5, dans lequel ledit câble (60) peut se courber dans une direction transversale perpendiculaire à son étendue longitudinale, et ladite direction transversale est sensiblement parallèle aux axes de pivotement desdits leviers.

9. Dispositif selon l'une quelconque des revendications précédentes, dans lequel ledit logement (26) dudit porte-sonde (25) comprend un orifice d'entrée pour un milieu de couplage fluide (59) et un orifice de pulvérisation (61) dans ladite face pour sonde.

10. Procédé de mesure d'épaisseur d'une plaque de refroidissement comprenant un corps pourvu d'une face antérieure (18), d'une face postérieure opposée (20), et comportant un ou des canaux pour fluide de refroidissement (16), comprenant :
l'introduction, dans ledit canal pour fluide de refroidissement, d'un dispositif (10) selon l'une quelconque des revendications précédentes ;
le déplacement dudit porte-sonde (25) à travers ledit canal pour fluide de refroidissement dans le sens de la longueur et le maniement dudit porte-sonde de façon que ladite sonde à ultrasons (28) soit globalement tournée vers ladite face antérieure (18) pendant la mesure de l'épaisseur du corps entre la face antérieure et le canal pour fluide de refroidissement ;
dans lequel, pendant lesdites mesures, ladite structure extensible est déployée pour appuyer contre la surface intérieure (42) du canal pour fluide de refroidissement et contraindre la face pour sonde du logement contre la surface du canal pour fluide de refroidissement ;
et dans lequel la progression à travers le canal est assistée au moyen dudit câble flexible attaché audit logement de sonde.

11. Procédé selon la revendication 10, dans lequel un milieu de couplage fluide est alimenté, pendant les mesures d'épaisseur, dans l'espace entre ladite sonde à ultrasons et la surface intérieure du canal pour fluide de refroidissement.

12. Procédé selon la revendication 11, dans lequel ledit milieu de couplage fluide est de l'eau pulvérisée par un orifice (61) ménagé dans ledit logement de sonde.

13. Procédé selon l'une quelconque des revendications 10 à 12, dans lequel ledit corps de plaque de refroidissement est obtenu par coulée et ledit canal pour fluide de refroidissement est percé dans ledit corps.
